# EUROPEAN PATENT APPLICATION

(11) **EP 0 915 302 A2**
(43) Date of publication of application: **12.05.1999**
(21) Application number: 98308890.7
(22) Date of filing: 30.10.1998
(51) Int. Cl.: F24F 13/075

(54) **Assembly of extruded or moulded parts**

(30) Priority: 04.11.1997 GB 9723304
(71) Applicant: DRAFTEX INDUSTRIES LIMITED, Edinburgh EH2 3AP, Scotland (GB)
(72) Inventor: Cour, Agnes, 44100 Nantes (FR)
(74) Representative: Foster, David Martyn

(57) **Abstract**

A ventilation assembly (30), such as for ventilating the interior of a motor vehicle body, comprises a frame (32) moulded from rigid thermoplastics material defining side walls (e.g. 32A), end walls (32C,32D) and a dividing wall (32E) which form apertures (34,36) controlled by flap valves (38,40). The flap valves (38,40) can be moulded *in situ* from flexible material but which is not compatible with the rigid material of the frame (30) and therefore does not adhere to it during the moulding process. The material of the flap valves (38,40) is provided with a series of holes through which protrude studs having enlarged heads (58,60) to form hinges (42,44) to enable the flap valves to flex between open and closed positions. In the closed position, the flap valves (38,40) seal against seats (50,52). Other embodiments are shown in which the flap valves (38,40) can be moulded of rigid material with hinge formations arranged to hingeably interlock with corresponding formations on the frame.

## Description

The invention relates to a method of making a hingeable connection between two extruded or mouldable members, comprising the steps of extruding or moulding a first, relatively rigid, member, extruding or moulding a second member, and hingeably connecting respective regions of the two members together.

The invention also relates to a flap valve assembly, comprising a frame defining an aperture, and a flap valve hingeably mounted on the frame and movable between a closed position in which it closes the aperture and an open position in which the aperture is open, the frame being made of relatively rigid material.

The invention further relates to a method of making a hingeable connection between two extruded or moulded members, comprising the steps of extruding or moulding a first one of the members in relatively rigid material, and extruding or moulding a second one of the members in relatively rigid material.

The invention yet further relates to a flap valve assembly, comprising a frame defining an aperture, and a flap valve hingeably mounted on the frame and movable between a closed position in which it closes the aperture and an open position in which the aperture is open, the frame and the flap valve being made of relatively rigid material.

The invention still further relates to a flap valve assembly, comprising a frame defining an aperture, and a flap valve hingeably mounted on the frame and movable between a closed position in which it closes the aperture around an open position in which the aperture is open, the frame and the flap valve being made of relatively rigid material, the frame providing a seat extending at least partly around the periphery of the aperture for receiving a seal carried by the flap valve.

Such methods and assemblies are known from GB-A-2 298 917.

According to the invention, the method as first set forth above is characterised in that the second member is relatively flexible whereby the remainder of the second member can hinge relative to the first member by virtue of its flexibility.

According to the invention, the assembly as first set forth above is characterised in that the flap valve is made of relatively flexible material with a region thereof mechanically connected to a corresponding region of the frame whereby the flexibility of the material of the flap valve allows the remainder of it to hinge between the closed and opened positions.

According to the invention, the method as secondly set forth above is characterised by the steps of including an interconnection formation in a region of the first member and including a complementary formation in a region of the second member, and bringing the two regions towards each other so that the formations hingeably interlock.

According to the invention, the assembly as secondly set forth above is characterised in that a region of the frame incorporates an interconnection formation, and in that a region of the flap valve incorporates a complementary interconnection formation, the two formations hingeably interlocking.

According to the invention, the assembly as thirdly set forth above is characterised in that the seat is mechanically joined to the frame.

Assemblies of moulded or extruded parts embodying the invention, including frame and flap valve arrangements for ventilation systems in motor vehicle bodies, and methods according to the invention of making such assemblies, will now be described, by way of example only, with reference to the accompanying diagrammatic drawings in which:
Figure 1 is a sectional side view showing the interconnection of two parts;
Figure 2 corresponds to Figure 1 but shows a modification of the manner in which the two parts can be connected together;
Figure 3 is a cross-section through one of the frame-flap valve assemblies;
Figure 4 is a plan view of the assembly of Figure 3;
Figure 5 is a cross-section corresponding to part of Figure 3 but showing a modification;
Figure 6 corresponds to Figure 5 but shows another modification.
Figure 7 is a cross-section through part of Figure 3 and showing a further modification;
Figure 8 is a side view of a reinforcing part shown in the modification illustrated in Figure 7;
Figure 9 is a cross-section through part of Figure 3 showing yet a further modification;
Figure 10 is a cross-section of another of the frame-flap valve assemblies;
Figure 11 is a cross-section through part of a further one of the flap-valve assemblies;
Figure 12 is a plan view of the assembly of Figure 11;
Figure 13 corresponds to Figure 11 but shows a modification; and
Figure 14 corresponds to Figure 11 but shows a further modification.

In the various Figures, parts carrying out the same functions are similarly referenced.

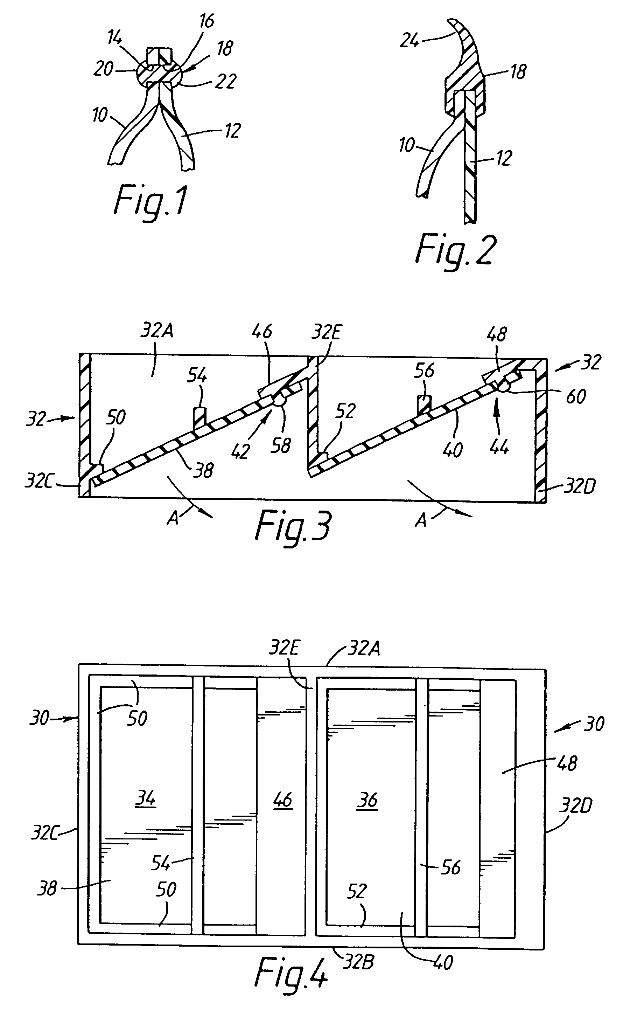

Referring to Figure 1, two parts 10,12 are to be connected together. The parts 10,12 may be parts produced by moulding or extrusion, or by any other similar process, from thermoplastic or similar mouldable material. Instead, however, they could be metal parts or parts made from other materials. Each part 10,12 is formed with a respective through hole 14,16. The parts are joined together by placing them in an injection mould with their regions containing the holes 14,16 placed together. Suitable material, such as thermoplastics material, is then injected into the mould, the geometry of the mould being such that the injected material 18 passes through both aligned holes 14,16 and forms enlarged heads 20,22. After solidifying, the moulded material 18 thus firmly holds the two parts 10,12 together.

As described, the two parts are held together mechanically by the enlarged heads 20,22 of the injected material. In this case, the material of the injected material 18 has no or very low physico-chemical compatability with the material of the parts 10,12. However, in certain cases, particularly where the parts 10,12 are produced from suitable thermoplastics material, the injected material 18 may have such physico-chemical compatability with the material of the parts 10,12 that the interconnection of the two parts 10,12 by the injected material 18 is at least in part produced by physico-chemical bonding.

Figure 2 shows a modification of the method and structure shown in Figure 1. In Figure 2, the moulded material 18 embraces the distal edges of the parts 10,12 to hold them together. Again, the gripping function carried out by the injected material 18 can be purely mechanical or can in least at part be due to physico-chemical bonding between the material 18 and the material of the parts 10,12 if suitable physico-chemical compatability exists.

In addition, Figure 2 shows how the material 18 can be shaped so as not only to carry out the function of connecting the parts 10,12 together but also an additional function: in this case, the material 18 is extended to provide a sealing lip 24.

Figures 3 and 4 show in cross-section a ventilation grill assembly 30 for use in a motor vehicle body. For example, the assembly 30 could be a ventilation grill for controllably ventilating the passenger compartment of the vehicle. As shown in Figures 3 and 4, the assembly 30 comprises a rigid frame 32 moulded from suitable thermoplastics material such as polyamide or polypropylene. As shown in Figure 4, the frame 32 has side walls 32A and 32B and end walls 32C and 32D, and a dividing wall 32E. The walls define two generally rectangular apertures 34,36. Each of these apertures can be controllably opened and closed by means of a respective flap valve 38,40. The flap valves 38,40 are produced from flexible rubber by extrusion or moulding. Figure 3 shows the flap valves in the closed position.

Each flap valve 38,40 is hingeably attached by a respective hinge 42,44 to the frame 32. Thus, hinge 42 hingeably connects the flap valve 38 to a shoulder 46 rigidly extending in a sideways-inclined direction from the dividing wall 32E. Hinge 44 hingeably connects the flap valve 40 to a rigid shoulder 48 extending in a sideways-inclined direction integrally from the end wall 32D.

The edges of the flap valves 38,40 except for their edges adjacent their respective hinges 42,44 make sealing contact, in the closed positions of the flap valves, with respective valve seats 50,52.

As shown in Figures 3 and 4, each aperture 34,36 may be bridged across by a rigid support 54,56 extending between the sidewalls 32A and 32B. The supports 54,56 help to support the mid-portions of the flap valves 38,40 in the closed position. The supports 54,56 may not be necessary, particularly where the cross-sectional areas of the apertures 34,36 are relatively small.

Each hinge arrangement 42,44 comprises a respective series of studs 58,60 made of rigid thermoplastics material which are integrally moulded with the frame 32 and extend side by side in a row along the inclined shoulder 46,48, the studs extending through respective holes in the flap valve 38,40. The studs have enlarged heads to hold the flap valve in position. The process of producing the flap valves 38,40 ensures that they are provided with holes in the required positions for receiving the studs 58,60 for forming the hinges 42,44. Instead, the studs can become pierced through the material of the flap valve 38,40 during the injection moulding process. Hingeing takes place because of the flexibility of the material from which the flap valves 38,40 are made. The arrows A show the direction in which the flap valves 38,40 hinge to open the apertures 34,36. Opening and closing of the apertures may take place in response to creation of an appropriate pressure difference between one side of each flap valve and the other.

In the closed position of the flap valves, as shown in Figure 3, the flexible material from which they are produced ensures that they provide a substantially air-tight seal against the respective seats 50, 52.

The manufacturing process may comprise an initial stage for producing the flap valves 38,40 by extrusion or moulding in suitable flexible thermoplastics, rubber or silicone rubber material. The material may be textile-covered. The flap valves are then placed in or transferred automatically to another mould which is designed to produce the frame 30. The moulding process is then carried out to produce the frame 30.

The material from which the flap valves 38,40 are produced must be such that it can withstand the conditions (temperature and pressure in particular) existing within the mould when the frame 30 is produced. In addition, the material of the flap valves 38,40 is selected so that it does not have physico-chemical compatability with the material from which the frame 30 is produced. In this way, adherence, or any substantial adherence, between the material of the flap valves 38,40 and the material of the frame 30 is prevented. If desired, the areas of the flap valves 38,40 which will come into contact with the material of the frame 30 during the moulding operation for the frame can be coated with suitable material to provide extra protection against adherence.

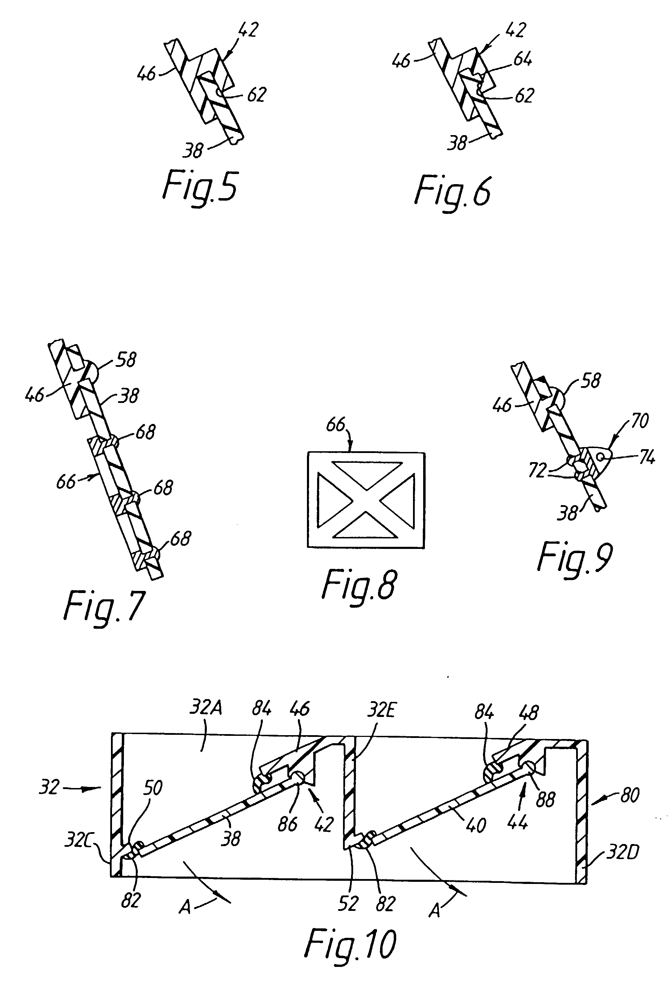

Figure 5 shows a modified design for the hinge 42 (hinge 44 would be similar). Here, the shoulder 46 (Figure 3) on the dividing wall 32E of the frame 30 is moulded to produce a groove 62 which embracingly grips the corresponding edge of the flap valve 38 so as to secure the flap valve and provide the necessary hingeing effect.

Figure 6 shows a modification of Figure 5 in which the flap valve 38 is provided with a series of extruded or moulded bosses 64 for increasing the gripping effect of the channel 62.

It may be advantageous to strengthen or increase the mass of the flap valves 38,40 and Figure 7 shows how this can be achieved by attachment of an armature 66 such as made of metal or other rigid material (see Figure 8). The armature 66 can be moulded onto the flap valve 38,40 during its manufacturing process. Instead, Figure 7 shows how the armature 66 can be attached by means of integral studs passing through holes in the flap valve and having enlarged heads 68.

In certain cases, it may be desirable for the positions of the flap valves 38,40 to be positively controlled (rather than simply being positioned according to pressure difference). Figure 9 shows how a control tab 70 may be secured to the body of the flap valve 38,40, during its manufacture, by a further moulding operation, the tab 70 being attached by means of studs which pass through holes in the flap valve 38,40 and terminate in enlarged heads 72. The tab 30 has a hole 74 by means of which a control lever may be attached to control the position of the flap valve.

In the assembly 80 of Figure 10, the frame 30 is again moulded in rigid thermoplastics material such as polyamide or polypropylene. In this case, though, the flap valves 38,40 are also moulded or otherwise produced in rigid thermoplastics material, such as material similar to or the same as the material of the frame 30; the flap valves 38,40 in Figure 10 thus contrast with the flap valves in the assembly 30 of Figures 3 and 4 where they are made of flexible material.

In the assembly 80, sealing of the closed flap valves 38,40 to the frame 30 is carried out by means of flexible seals 82,84 which are made of flexible material over-moulded onto the seats 50,52 and the shoulders 46,48. Clearly, the flexible material of the sealing lips 82,84 must have suitable physico-chemical compatability with the material of the frame 30.

The hinges 42,44 in the assembly 80 are formed by enlarged edges for the flap valves 38,40, whch are generally circular in cross-section and are fitted into complementary grooves 86,88 carried by the rigid shoulders 46,48, there being sufficient play within these grooves 86,88 to permit articulation of the flap valve.

During manufacture, an initial stage can form the frame 30 by injection of the thermoplastics material. This can be followed by an over-moulding process to form the seals 82,84.

The formation of the flap valves 38,40, such as by injection moulding, can be carried out at the same time as the moulding of the frame 30 or completely separately. The flap valves are then assembled to, and secured to, the frame 30 by snapping the enlarged edges of the flap valves into the grooves 86,88.

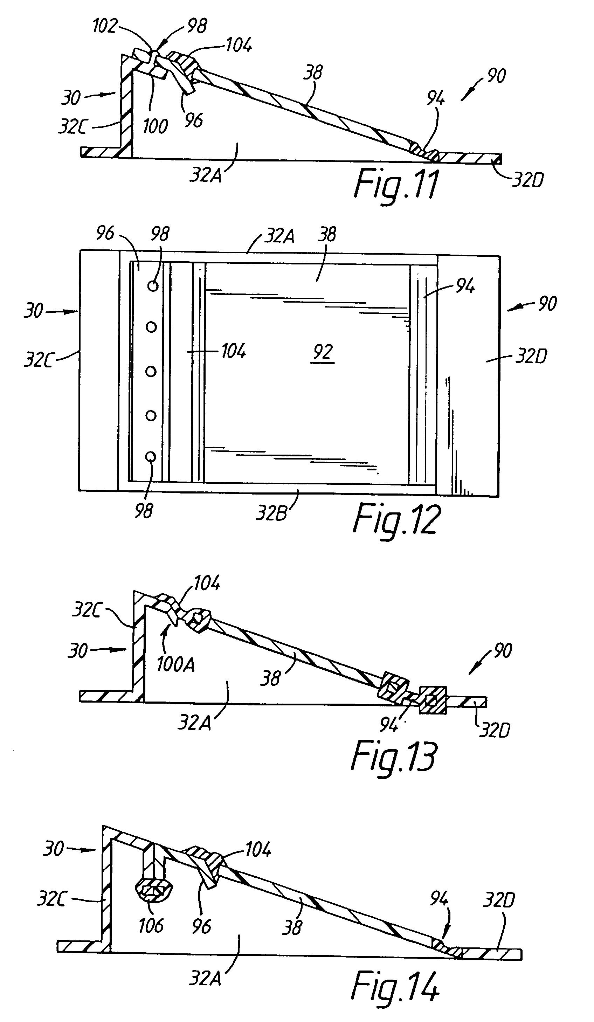

The assembly 90 of Figures 11 and 12 provides only a single aperture 92 in this example. In the assembly 90, the frame 30 comprises the sidewalls 32A and 32B and end walls 32C and 32D (see Figure 12) but without the dividing wall 32E of Figures 3 and 10. As before, the frame 30 is moulded in rigid thermoplastics material such as polypropylene. The aperture 92 is controlled by a single flap valve 38 which is also moulded in rigid thermoplastics material, preferably the same as that of the frame 30. The flap valve 38 is hingedly attached to the wall 32D by a hinge shown at 94 comprising flexible thermoplastics material which secures the flap valve 38 to the wall 32D because of the physico-chemical compatability of the two materials.

The valve seat 96 is provided by rigid thermoplastics material (e.g. polyamide), again surrounding the three sides of the aperture 92 (that is, all sides except the hinge side), which is mechanically secured to the end wall 32C by means of a series of studs 98 integrally upstanding from a rigid integral lip 100 of the wall 32C and which pass through a series of complementary holes formed in the seat 96, the studs having enlarged heads 102. The seat 96 does not become secured to the lip 100 because of the lack of physico-chemical compatability between the two materials.

Sealing between the flap valve 38 and the seat 96 is carried out by a seal 104 which extends around the four sides of the flap valve (that is, including the hinge side) and which is over-moulded onto the flap valve 38 and becomes secured thereto because of the physico-chemical compatability between the corresponding materials.

The initial stage of the manufacturing process can comprise an injection moulding process to form the seat 96. During the next stage, injection of the material to form the remainder of the frame 30, and the flap valve 38, takes place. Finally, injection to produce the seal 104 and the hinge 94 takes place. These steps can be carried out using a tri-injection press in which all three moulding stages could take place. Instead, a bi-injection press could take place for carrying out the two initial stages, with a mono-injection press to carry out the third stage. Suitable manipulators can be used to carry out transfers of the parts between the presses. Instead, three mono-injection presses could be used.

In the modification shown in Figure 13, a separate seat 96 as shown in Figure 11 and 12 is not used. Instead, the rigid shoulder 100 of Figure 11 is extended and modified to form the seat as shown at 100A.

Figure 13 also shows how the material of the hinge 94 and the material of the seal 104 can be moulded so as at least partly to be secured to the corresponding edges of the flap valve 38 by mechanical shaping. All parts can be made of polyamide except the hinge.

During manufacture, an initial stage can inject the material to form the frame 30 including the seat 100A and also the body of the flap valve 38. Injection then takes place to form the hinge 94 and the seal 104.

In the modified assembly 90 shown in Figure 14, the construction is generally similar to that shown in Figure 13, except that the seat 96 is (like the arrangement of Figure 11) separate from the rigid shoulder 100 of the end wall 32C but attached to it through the intermediary of a mechanical fixture carried out during the moulding operation which attaches the flexible material to the flap valve 38 to form the hinge 94 and the seal 104. During this moulding process, additional flexible thermoplastics material 106 attaches the seat 96 to the shoulder 100.

An initial stage of the manufacturing process of the assembly 90 of Figure 14 comprises injection of the material to form the seat 96. This is followed by injection of similar rigid material to form the frame 30 and the flap valve 38. Thereafter, the flexible thermoplastics material is injected to form the hinge 94, the seal 104 and the fixture 106.

In each case, the frame 30 can be modified by the addition of integrally moulded elements for carrying out supplementary functions (mounting attachments for fixtures, air deflectors and the like). Similarly, in each case the flap valves 38,40 can be provided with additional elements such as shown in Figures 7,8 and 9.

## Claims

1. A method of making a hingeable connection between two extruded or mouldable members (32,38), comprising the steps of extruding or moulding a first, relatively rigid, member (32), extruding or moulding a second member (38), and hingeably connecting respective regions of the two members (32,38) together, characterised in that the second member (38) is relatively flexible whereby the remainder of the second member (38) can hinge relative to the first member (32) by virtue of its flexibility.

2. A method according to claim 1, characterised in that the connection step is carried out by integrally extruding or moulding an interconnection formation (58) in the region of one said member (32,38), and extruding or moulding the other member (32,38) so that its region includes a complementary formation interconnecting with the interconnection formation (58).

3. A method according to claim 2, characterised in that one formation comprises a projection (58) and the other comprises an aperture.

4. A method according to any preceding claim, characterised in that the materials of the first and second members (32,38) have substantially no physico-chemical compatability.

5. A method according to any one of claims 1 to 3, characterised in that the materials of the two members (32,38) have physico-chemical compatability.

6. A flap valve assembly, comprising a frame (32) defining an aperture (32A), and a flap valve (38) hingeably mounted on the frame (32A) and movable between a closed position in which it closes the aperture (32A) and an open position in which the aperture (32A) is open, the frame (32) being made of relatively rigid material, characterised in that the flap valve (38) is made of relatively flexible material with a region thereof mechanically connected to a corresponding region of the frame (32) whereby the flexibility of the material of the flap valve (38) allows the remainder of it to hinge between the closed and opened positions.

7. An assembly according to claim 6, characterised in that one formation is a protruberance (58) and the other is an aperture.

8. An assembly according to claim 6 or 7, characterised in that the materials of the frame (32) and the flap valve (38) have substantially no physico-chemical compatability.

9. An assembly according to claim 6 or 7, characterised in that the materials of the frame (32) and the flap valve (38) are physico-chemically compatible.

10. An assembly according to any one of claims 6 to 9, characterised in that the frame (32) includes a seat (50) for receiving an edge of the flap valve (38) to provide a seal for the aperture (32A) in the closed position of the flap valve (38).

11. An assembly according to any one of claims 6 to 10, characterised by a rigid support (54) extending across the aperture (32A) to support the flap valve (38) in its closed position.

12. An assembly according to any one of claims 6 to 11, characterised in that the frame (32) and the flap valve (38) are extruded or moulded from thermoplastics material.

13. A method of making a hingeable connection between two extruded or moulded members (32,38), comprising the steps of extruding or moulding a first one (32) of the members in relatively rigid material, and extruding or moulding a second one (38) of the members in relatively rigid material, characterised by the steps of including an interconnection formation (46) in a region of the first member (32) and including a complementary formation in a region of the second member (38), and bringing the two regions towards each other so that the formations hingeably interlock.

14. A method according to claim 13, characterised in that the materials have substantially no physico-chemical compatability.

15. A flap valve assembly, comprising a frame (32) defining an aperture (32A), and a flap valve (38) hingeably mounted on the frame (32) and movable between a closed position in which it closes the aperture (32A) and an open position in which the aperture (32A) is open, the frame (32) and the flap valve (38) being made of relatively rigid material, characterised in that a region of the frame (32) incorporates an interconnection formation (46), and in that a region of the flap valve (38) incorporates a complementary interconnection formation, the two formations hingeably interlocking.

16. An assembly according to claim 15, characterised in that one formation comprises a groove extending longitudinally and generally parallel to the plane of the opening and the other formation is a longitudinally extending formation having a surface matching at least part of the surface of the groove for angularly movable location in the groove.

17. An assembly according to claim 15 or 16, characterised in that the frame (32) defines a seat (50) extending at least partway around the aperture (32A) for sealingly receiving an edge of the flap valve (38) when the flap valve (32) is in the closed position.

18. An assembly according to claim 17, characterised in that the seat (50) incorporates flexible material (82) attached to the rigid material of the frame (32).

19. An assembly according to claim 18, characterised in that the flexible material (82) is attached to the rigid material of the frame (32) by over-moulding.

20. An assembly according to any one of claims 15 to 19, characterised in that the frame (32) and the flap valve (38) are respectively extruded or moulded in the rigid thermoplastic material.

21. A flap valve assembly, comprising a frame (32) defining an aperture (32A), and a flap valve (38) hingeably mounted on the frame (32) and movable between a closed position in which it closes the aperture (32A) around an open position in which the aperture (32A) is open, the frame (32) and the flap valve (38) being made of relatively rigid material, the frame (32) providing a seat (96) extending at least partly around the periphery of the aperture for receiving a seal (104) carried by the flap valve (38), characterised in that the seat (96) is mechanically joined to the frame (32).

22. An assembly according to claim 21, characterised in that the seat (96) is joined to the frame (32) by interlocking formations (98) respectively carried by the frame (32) and the seat (96).

23. An assembly according to claim 21, characterised in that the seat (96) is joined to the frame (32) by a connection (106) over-moulded onto and extending between the seat (96) and the frame (32).
